# EUROPÄISCHE PATENTANMELDUNG

(11) **EP 1 630 540 A1**
(43) Veröffentlichungstag der Anmeldung: **01.03.2006**
(21) Anmeldenummer: 05018910.9
(22) Anmeldetag: 30.08.2005
(51) Int. Cl.: G01N 21/00, B60L 5/00

(54) **Verfahren und Vorrichtung zur Bewertung von Benetzungen von Objekten bei hoher Geschwindigkeit**

(30) Priorität: 31.08.2004 DE 102004042484
(71) Anmelder: DB Fernverkehr AG, 60326 Frankfurt (DE)
(72) Erfinder: Hulin, Bernhard, Dr., 81245 München (DE)
(74) Vertreter: Zinken-Sommer, Rainer

(57) **Zusammenfassung**

Die Erfindung betrifft ein Verfahren und eine Vorrichtung zur Bewertung von Benetzungen von Objekten. Die Erfindung findet insbesondere Anwendung zur Ermittlung von ungefetteten Abrollkurven und defekten Gummi-Manschetten von Schwingungsdämpfern von Stromabnehmern an Schienenfahrzeugen.

Erfindungsgemäß erfolgt sowohl eine zeitgleiche Beleuchtung im ultravioletten und sichtbaren Bereich als auch eine zeitgleiche Aufnahme in den beiden Spektralbereichen.

Anschließend wird bildpunktweise eine Differenz der Intensität des sichtbaren Kanals abzüglich Intensität des ultravioletten Kanals durchgeführt, aus deren Intensität auf die benetzende Substanz geschlossen werden kann. Ebenso ist zwingend eine Objekterkennung erforderlich, da während die einen Objekte mit Fett bedeckt sein müssen, andere Öl-frei sein müssen. Zudem gibt es gut 3 Dutzend Stromabnehmertypen, die ihre Schwingungsdämpfer und Abrollkurven unterschiedlich positioniert haben. Somit kann also nicht anhand der Position eines Bildpunktes darauf geschlossen werden, ob an dieser Bildpunktposition Öl und/oder Fett vorhanden sein muss.

## Beschreibung

Die Erfindung betrifft ein Verfahren und eine Vorrichtung zur Bewertung von Benetzungen von Objekten. Die Erfindung findet insbesondere Anwendung zur Ermittlung von ungefetteten Abrollkurven und defekten Gummi-Manschetten von Schwingungsdämpfern von Stromabnehmern an Schienenfahrzeugen.

Außerdem findet die Erfindung Anwendung zur Ermittlung von Schmierfilm auf den Schienen. Hierbei nimmt eine am fahrenden Zug montierte Kamera die Strecke nach und nach auf.

Eine Benetzung beschreibt hierbei, wie sich eine Substanz auf der Oberfläche eines festen Körpers verhält, wenn die Substanz mit diesem Festkörper in Kontakt kommt. Eine derartige Substanz ist insbesondere Fett, Öl bzw. eine beliebige Flüssigkeit.

In der Technik findet eine Benetzungen von Objekten mit Öl und Fett Anwendung in verschiedenartigen Bereichen. So wird insbesondere Reibung zwischen Flächen, die sich aufeinander bewegen, durch Öl oder Fett vermindert und so die Energie zur Aufrechterhaltung dieser Bewegung reduziert. Desweiteren wird Öl aufgrund seiner Viskosität und Inkompressibilität als Hydrauliköl eingesetzt, insbesondere um in hydraulischen Schwingungsdämpfern (häufig irrtümlich als Stoßdämpfer bezeichnet) Amplituden mechanischer Schwingungen zu reduzieren oder um in Hebebühnen Lasten anzuheben.

Ein Verlust von Öl und Fett muss jedoch vermieden werden, da dieses zum einen zu einer Umweltverschmutzung und zum anderen zu einer Funktionsbeeinträchtigung der öl- oder fettbeinhaltenden Gegenstände führt.

Bei elektrisch betriebenen Schienenfahrzeugen werden Stromabnehmer eingesetzt, die einen elektrischen Kontakt zwischen einer Fahrleitung, die die elektrische Energie zur Verfügung stellt, und dem Schienenfahrzeug herstellen. Die Stromabnehmer sind höhenverstellbar, so dass sie an unterschiedliche Höhen der Fahrleitung angepasst werden können. Hierfür werden Schwingungsdämpfer eingesetzt und sind bestimmte Teile des Stromabnehmers gefettet.

Der Schwingungsdämpfer ist insbesondere als ölhydraulischer Dämpfer ausgeführt, dessen Kolbenstange zum Schutz vor Verschmutzung mit einer Gummi-Manschette ummantelt ist. Ein Defekt des Schwingungsdämpfers oder der Gummi-Manschette kann zu Austritt von Hydrauliköl und somit zu Verschmutzungen des Stromabnehmers und einem teilweisen oder vollständigen Funktionsverlust des Schwingungsdämpfers und damit zu einer mechanischen Sperrung des Stromabnehmers führen. Der Stromabnehmer verharrt in einer bestimmten Höhe, selbst wenn sich die Höhe des Fahrdrahts ändert. Somit treten bei einer höheren Lage der Fahrleitung Lichtbögen auf. Im umgekehrten Fall, wenn sich die Höhe der Fahrleitung verringert (wie z.B. unterhalb von Brücken), kann diese mechanische Sperrung des Stromabnehmers zu einer höheren Belastung und einer Beschädigung der Oberleitung führen.

Zusätzlich wird die Bewegung des Stromabnehmers über ein gespanntes Stahlseil kontrolliert, dass an einem unteren Gelenk des Stromabnehmers um eine Abrollkurve umgelenkt wird. Im Bereich der Abrollkurve ist das Stahlseil gefettet, um ein reibungs- und damit verschleißarmes Abrollen des Stahlseiles auf der Abrollkurve zu gewährleisten. Ein Verlust dieses Fettes insbesondere durch Witterungseinflüsse wie z.B. Regen oder durch mechanischen Abrieb führt somit zu einer erhöhten Reibung zwischen Stahlseil und Abrollkurve. Dies kann zu Funktionsstörungen des unteren Gelenkes sowie zu erhöhtem Verschleiß des Stahlseiles führen. In der Folge kann das Stahlseil abreißen, wodurch der Stromabnehmer seine aufwärtswirkende Kraft verliert, in seine Grundstellung fällt und nicht mehr aufgespannt werden kann. Ferner kann durch das abgetrennte Stahlseil ein Kurzschluss am Dach des Triebfahrzeuges entstehen, wodurch auch der zweite Stromabnehmer eines Triebfahrzeuges nicht mehr angehoben werden kann. Ein Riss des Stahlseiles führt somit zwangsläufig zum Ausfall des Triebfahrzeuges und somit zu Verspätungen.

Von derartigen Problemen sind auch Stromabnehmer fremder Bahnen betroffen, die das Netz der Deutsche Bahn AG benutzen. Um Störungen im Betrieb zu vermeiden, muss sichergestellt sein, dass auch Stromabnehmer dieser Bahnen keine ungefettete Abrollkurve und/oder keinen defekten Schwingungsdämpfer besitzen. Da Personal der Deutsche Bahn AG auf diesen Zügen meistens keine Zugangsberechtigung besitzt und somit keine direkte Inaugenscheinnahme erfolgen kann, ist das Aufstellen kostengünstiger automatischer Inspektionsanlagen, die dies Bewerkstelligen, eine sinnvolle Lösung. Dabei wird die Inspektionsanlage auf freier Strecke aufgebaut und nimmt Bilder vorbeifahrender Züge auf. Dies bedeutet eine hohe Relativgeschwindigkeit zwischen Objekt und Aufnahmeeinheit.

Ebenso stellt Schmierfilm auf Schienen, der beispielsweise aus verrottender oder durch das Gewicht von Zügen zusammengepresster Vegetation entsteht, ein großes Problem für die Deutsche Bahn AG dar, da sich hierdurch der Bremsweg von Zügen verlängert. Dies führt zu einem "Vorbeirutschen" der Züge an Bahnsteigen und Haltesignalen. Auf der anderen Seite führt derartiger Schmierfilm beim Beschleunigen eines Zuges zum Durchdrehen mehrerer Räder, wodurch die Antriebskraft vermindert und auf weniger Räder verteilt wird. Insbesondere ergibt sich hierdurch ein Abrieb also eine Beschädigung der Schiene.

Durch eine vorzeitige Inspektion der Schienen bezüglich Schmierfilm, können Warnungen für die Lok- und Triebfahrzeugführer ausgesprochen und Reinigungsempfehlungen gegeben werden.

Als Stand der Technik zur Erkennung von Öl und/oder Fett ist aus der Zeitschrift "Technology from Europe" vom April 2002 auf Seite E-41 bis E-42 ein Verfahren und eine Vorrichtung bekannt, bei dem eine Erkennung von Ölteppichen auf Wasser anhand von Fluoreszenz ultravioletter Strahlung stattfindet. Hierbei wird das Öl mit ultraviolettem Licht beleuchtet und gibt die im ultravioletten Bereich aufgenommene Lichtenergie als Licht unterschiedlicher Frequenzen im sichtbaren Bereich wieder ab. Nachteilig hierbei ist jedoch, dass die Fluoreszenz aufgrund ihrer geringen Lichtstärke bei Tageslicht gegenüber normalem reflektiertem Sonnenlicht nahezu nicht erkennbar ist. Zusätzlich erfordert dieses Verfahren aufgrund der geringen Lichtstärke der ultravioletten Fluoreszenz für eine photographische Aufzeichnung eine lange Belichtungszeit. Dies schließt die Anwendung dieses Verfahrens für zeitlich kurze Vorgänge sowie eine Echtzeitdarstellung aus.

Als weiterer Stand der Technik ist aus dem Internet der Artikel "Looking for oil spills on oceans with remote sensing" vom 30.10.2002 (http:*ll*www.oso.chalmers.se/~hgs/ESST/Looking_for_oil_spill_using_RS.PDF) die Erkennung von Öl in Wasser über die unterschiedliche Reflektivität von Öl und Wasser in unterschiedlichen spektralen Wellenlängenbereichen bekannt. Dieser Artikel bezieht sich jedoch ausschließlich auf die Unterscheidung von Öl und Wasser eines Meers oder Sees mit mehreren Metern tiefe. Ebenso wird nicht zwischen Säure, Lauge und anderen benetzenden Materialien unterschieden. Eine Unterscheidung von Objekten die Öl-frei oder Öl-behaftet sind, ist nicht möglich.

Ebenso ist aus JP 08128916 A ein "Oil Leak Detection Device" bekannt, das Öl anhand der Reflektivität des nacheinander ausgesendeten ultravioletten und sichtbaren Licht erkennt. Aufgrund der zeitlich hintereinander erfolgenden Aussendung der beiden Wellenlängen sind auch zwei zeitlich hintereinander erfolgende Aufnahmen erforderlich. Da sich bei fahrenden Zügen aufgrund von Wankbewegungen, Fliehkräften, Sinuslauf und Neigetechnik der Stromabnehmer bei zwei Zeitpunkten an unterschiedlichen, a priori nicht berechenbaren Orten befinden kann, ist ein Vergleich der beiden zeitlich versetzten Augnahmen nicht in gewünschtem Umfang möglich. Somit ist auch eine Erkennung von Öl oder Fett mit dieser Vorrichtung an sich bewegenden Objekten nicht möglich.

Die Erfindung hat demzufolge die Aufgabe, ein Verfahren und eine Vorrichtung anzugeben, das automatisch Öl und/oder Fett und/oder Säure und/oder Feuchtigkeit und/oder Lauge und/oder Schmierfilm auf bewegten Objekten erkennt.

Diese Aufgabe wird erfindungsgemäß für das Verfahren durch die in Anspruch 1 angegebenen Merkmale sowie für die Vorrichtung durch die in Anspruch 12 angegebenen Merkmalen gelöst.

Nach Anspruch 1 erfolgt sowohl eine zeitgleiche Beleuchtung im ultravioletten und sichtbaren Bereich als auch eine zeitgleiche Aufnahme in den beiden Spektralbereichen. Die Beleuchtung muss hierbei nicht künstliches Licht sein, sondern kann auch Umgebungslicht oder Sonnenstrahlung sein.

Anschließend wird bildpunktweise eine Differenz der Intensität des sichtbaren Kanals abzüglich Intensität des ultravioletten Kanals durchgeführt, aus deren Intensität auf die benetzende Substanz geschlossen werden kann. Ebenso ist zwingend eine Objekterkennung erforderlich, da während die einen Objekte mit Fett bedeckt sein müssen, andere Öl-frei sein müssen. Zudem gibt es gut 3 Dutzend Stromabnehmertypen, die ihre Schwingungsdämpfer und Abrollkurven unterschiedlich positioniert haben. Somit kann also nicht anhand der Position eines Bildpunktes darauf geschlossen werden, ob an dieser Bildpunktposition Öl und/oder Fett vorhanden sein muss.

Grundlage für das Verfahren ist die niedrigere Reflektivität von Öl und Fett im ultravioletten Bereich gegenüber dem visuellen Bereich. Nicht durch Öl und/oder Fett beschichtete Objekte haben im ultravioletten Bereich die gleiche Reflektivität wie im visuellen Bereich, insbesondere im blauen Bereich, wohingegen die Reflektivität von durch Öl und/oder Fett beschichteten Objekten im ultravioletten Bereich niedriger ist als im visuellen, insbesondere blauen, Bereich. Bei Stahl oder grauen Objekten muss nicht notwendigerweise der blaue Bereich, sondern kann auch der rote oder grüne Bereich verwendet werden. Durch die bildpunktweise Differenz von visuellem Kanal und ultravioletten Kanal erscheinen im resultierenden Bild alle fett- und/oder ölbeschichteten Objekte hell, während andere Objekte im resultierenden Bild schwarz erscheinen, d.h. die Intensität ist gering.

Besonderer Vorteil dieses Verfahrens ist, dass es bei hohen Relativgeschwindigkeiten zwischen Bildaufzeichnungsvorrichtung und zu untersuchendem Objekt verwendbar ist, insbesondere bis 330 km/h eines Hochgeschwindigkeits-Schienenfahrzeuges.

Desweiteren kann das Verfahren vorteilhaft automatisch durchgeführt werden, so dass ungefettete oder ölfreie Objekte auf ihre Fett- oder Ölfreiheit bzw. gefettete oder geölte Objekte auf ihren gefetteten oder geölten Zustand automatisch inspiziert und überwacht werden.

Desweiteren benötigt das Verfahren vorteilhaft keine eigene Beleuchtung, sondern kommt mit der Umgebungshelligkeit aus. Dadurch ist zum einen der Energiebedarf gering, zum anderen wird dadurch die Problematik umgangen, die zur Überblendung der Sonnenstrahlen erforderlich ist.

Ansprüche 2 bis 11 beinhalten vorteilhafte Ausführungsformen des erfindungsgemäßen Verfahrens.

Nach Anspruch 5 wird der Differenzwert mit einem Schwellwert verglichen, der nach Anspruch 6 insbesondere in Abhängigkeit von insbesondere Umgebungshelligkeit, Blende eines Objektivs der Bildaufzeichnungsvorrichtung und Belichtungszeit bestimmt wird. Die Bestimmung des Schwellwertes kann insbesondere auch über eine durch vorherige Kalibrierung der Bildaufzeichnungsvorrichtung gewonnene Lookup-Table oder Datenbank erfolgen. Die Kalibrierung erfolgt hierbei dadurch, dass die Bildaufzeichnungsvorrichtung die Intensität von gefetteten und fettfreien Objekten für verschiedene Belichtungszeiten und Lichtverhältnisse ermittelt.

Anspruch 7 gibt ein vorteilhaftes Ausführungsbeispiel zur Ermittlung des Schwellwertes an. Eine handelsübliche schwarz-weiß-Digitalkamera mit einer 8bit-Graustufenauflösung weist 256 Grauwerteinheiten auf. Im resultierenden Bild der bildpunktweisen Differenz von visuellem Kanal und ultravioletten Kanal dieser Kamera weisen fett- und ölfreie Objekte idealerweise einen um Null Grauwerteinheiten verteilten Maximalwert des Grauwertes auf, realerweise ist er etwa um 10 Grauwerteinheiten verteilt. Fett- und/oder ölbehaftete Objekte hingegen weisen einen Maximalwert des Grauwertes auf, der bei höheren Grauwerteinheiten liegt. Dieser soll mindestens 30 Grauwerteinheiten über dem Maximalwert des Grauwertes der fett- und ölfreien Objekte liegen, um eine sichere Auflösung der beiden Maximalwerte voneinander zu erreichen. Der Schwellwert wird nun so gewählt, dass er zwischen dem Maximalwert des Grauwertes der fett- und ölfreien Objekte und dem der fett- und/oder ölbehafteten Objekte liegt, vorzugsweise nach Anspruch 9 in deren Mitte, d.h. im Bereich zwischen 15 und 25 Grauwerteinheiten.

Nach Anspruch 10 wird das Objekt innerhalb des Bildes von einer Mustererkennung erkannt und identifiziert. Somit wird aus der Menge der Objekte innerhalb des Bildes dasjenige Objekt erkannt und identifiziert, das zu untersuchen ist. Dies geschieht üblicherweise mit Algorithmen zur Mustererkennung des Standes der Technik.

Nach Anspruch 11 wird eine Entscheidung, ob und wenn ja mit wie viel Öl und/oder Fett das Objekt oder der Objektteil behaftet ist, getroffen. Hierbei wird die Differenz der Intensität des sichtbaren Kanals und der Intensität des ultravioletten Kanals des gemäß Anspruch 7 erkannten und identifizierten Objektes mit einem insbesondere in einer Datenbank vorgegebenen Differenz verglichen. Anhand dieses Vergleichs wird die Entscheidung getroffen, ob und wenn ja mit wie viel Öl und/oder Fett das Objekt oder der Objektteil behaftet ist.

Nach Anspruch 12 nimmt mindestens eine auf das Objekt gerichteten Bildaufzeichnungsvorrichtung mit mindestens einem nur im sichtbaren Bereich empfindlichen Kanal sowie mindestens eine auf das Objekt gerichteten Bildaufzeichnungsvorrichtung mit mindestens einem nur im ultravioletten Bereich empfindlichen Kanal ein Bild des Objektes auf. Die Bildaufzeichnungsvorrichtungen sind mit mindestens einer Datenaufzeichnungsanlage verbunden, die die Bilder speichert und/oder auswertet, und eine bildpunktweise Differenz aus einer Intensität des sichtbaren Kanals, des ultravioletten Kanals und einem Schwellwert durchführt.

Insbesondere werden für die sichere und vollständige Erfassung aller Objekte Aufnahmen aus mindestens zwei Perspektiven getätigt, da die Objekte ansonsten vollkommen oder teilweise verdeckt sein könnten.

Die Ansprüche 13 bis 17 beinhalten vorteilhafte Ausführungsformen der erfindungsgemäßen Vorrichtung.

Nach Anspruch 13 nimmt mindestens eine Multispektralkamera, die sowohl einen im ultravioletten, als auch einen im sichtbaren Bereich empfindlichen Kanal und ein sowohl im ultravioletten, als auch im sichtbaren Bereich durchlässiges Objektiv aufweist, das Bild des Objektes auf. Die Multispektralkamera ist hierbei erforderlich, da bei der bildpunktweisen Differenz keine Parallaxe zulässig ist. Dies schließt die Verwendung zweier Kameras aus, da diese durch ihre räumliche Distanz grundsätzlich eine Parallaxe aufweisen.

Die Multispektralkameras bestehen insbesondere jeweils aus mindestens zwei Kanälen, wobei ein Kanal insbesondere im ultravioletten Bereich und ein anderer insbesondere im visuellen, insbesondere im blauen, Bereich empfindlich ist.

Nach Anspruch 14 steht das Fahrzeug und wird die mindestens eine Bildaufzeichnungsvorrichtung und/oder Multispektralkamera am stehenden Fahrzeug vorbeigeführt.

Diese Aufnahmen werden bei einem stehenden Triebfahrzeug mit mindestens einer Sensoreinheit zeitlich nacheinander durchgeführt, indem die Sensoreinheit am zu untersuchenden Objekt vorbeibewegt wird. Diese Vorrichtung wird vorteilhaft an Bahnhöfen oder vor Ausbesserungswerken angewendet.

Nach Anspruch 15 ist die mindestens eine Bildaufzeichnungsvorrichtung und/oder Multispektralkamera ortsfest angeordnet. Zur Inspektion fährt das Fahrzeug an dieser vorbei. Hierbei werden insbesondere alle Aufnahmen zeitgleich durchgeführt

Nach Anspruch 17 wird das Objekt im visuellen oder ultravioletten Bereich beleuchtet. Hierdurch wird auch bei ungünstigen Lichtverhältnissen, insbesondere Regen, Nebel oder nachts, eine Erkennung von Öl und/oder Fett an den Objekten ermöglicht.

Diese Vorrichtung eignet sich insbesondere zum Einsatz auf freier Strecke. Besonders vorteilhaft ist hierbei, dass damit viele Schienenfahrzeuge und somit viele Stromabnehmer und hierbei insbesondere eine Abrollkurve und eine Schwingungsdämpfermanschette unter Verwendung nur eines Systems inspiziert werden können.

Zur Inspektion von Stromabnehmern besteht die Vorrichtung aus insbesondere vier Bildaufzeichnungsvorrichtungen und/oder Multispektralkameras. Bei einem Einholm-Stromabnehmer ist insbesondere eine Inspektion sowohl mit Gelenk in Fahrtrichtung, dem sog. Kniegang, als auch umgekehrt, dem sog. Spießgang, möglich.

Die erfindungsgemäße Vorrichtung kann jedoch nicht nur zur Inspektion von Stromabnehmern, sondern auch zur Inspektion aller gefetteten oder ölhaltigen Objekte eines Fahrzeuges eingesetzt werden. So können beispielsweise auch Schwingungsdämpfer in Fahrwerken, Achslager, Getriebe oder ölgefüllte Transformatoren auf ihre Funktionstüchtigkeit überprüft werden. Hierfür werden die Bildaufzeichnungsvorrichtungen auf die entsprechenden Objekte gerichtet oder werden Bildaufzeichnungsvorrichtungen verwendet, deren Objektiv einen großen Öffnungswinkel aufweist und die somit gleichzeitig mehrere Objekte erfassen.

Desweiteren eignet sich die erfindungsgemäße Vorrichtung nicht nur zur schnellen und einfachen Inspektion von Schienenfahrzeugen, sondern insbesondere auch von Straßenfahrzeugen, Flugzeugen, Schiffen, Stromaggregaten und Turbinen.

Auch sind die benetzenden Substanzen nicht auf die o.g. eingeschränkt. Beispielsweise können mit eine Vergleich zwischen dem ultravioletten und sichtbaren Spektrum ebenso flüssige Lacke an Objekten bewertet werden.

Neben den o.g. Einsatzgebieten ist die Ermittlung von Öl, Säure oder Lauge auf der Straße ein mögliches Einsatzgebiet. Dabei wird die Vorrichtung auf ein automobiles Fahrzeug oder auf ein Luftfahrzeug montiert.

Die Erfindung wird nachstehend anhand zweier Ausführungsbeispiele und einer Zeichnung mit vier Figuren näher erläutert. Die Zeichnung zeigt in
- **Fig. 1**: schematisch einen Einholm-Stromabnehmer gemäß Stand der Technik,
- **Fig. 2**: schematisch einen Stromabnehmers mit einer Abrollkurve gemäß Stand der Technik.
- **Fig. 3**: schematisch ein Triebfahrzeug in frontaler Ansicht sowie zwei Kameras, deren optische Achse horizontal auf einen Grundrahmen eines Stromabnehmers ausgerichtet ist,
- **Fig. 4**: schematisch ein Triebfahrzeug in frontaler Ansicht sowie zwei Kameras, deren optische Achse diagonal von oben auf den Grundrahmen des Stromabnehmers ausgerichtet ist.

Ein erstes Ausführungsbeispiel betrifft eine Inspektion eines Schwingungsdämpfers an einem Stromabnehmer eines Triebfahrzeuges des Schienenverkehrs.

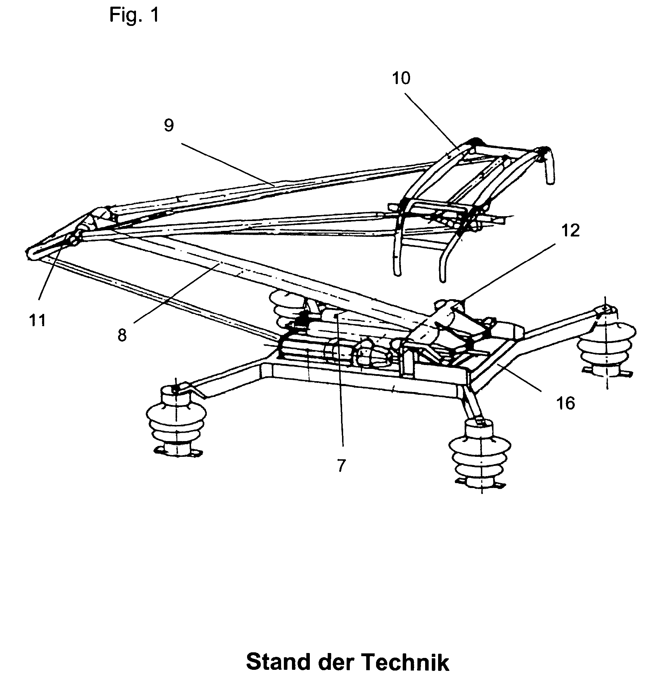

In **Fig. 1** ist schematisch ein Stromabnehmer in der Bauart eines Einholm-Stromabnehmers gemäß dem Stand der Technik dargestellt.

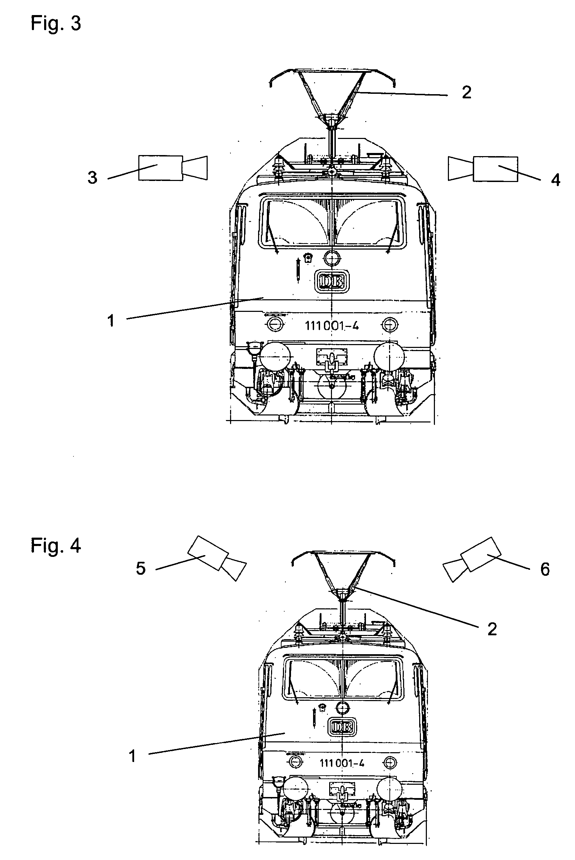

Der Stromabnehmer besteht aus einem Oberarm 9 und einem Unterarm 8, die über ein Kniegelenk 11 gelenkig miteinander verbunden sind. Am Oberarm 9 ist eine Wippe 10 angebracht, die über zwei Schleifstücke einen elektrischen Kontakt zu einer Oberleitung herstellt. Der Unterarm 8 ist über ein unteres Gelenk 12 mit einem Grundrahmen 16 gelenkig verbunden, der wiederum auf einem Triebfahrzeug 1 gemäß **Fig. 3** befestigt ist. Die Bewegung des Unterarmes 8 des Stromabnehmers wird durch einen Schwingungsdämpfer 7 gedämpft, so dass der Unterarm 8 und Oberarm 9 und damit die Wippe 10 nicht zu freien Eigenschwingungen angeregt werden können.

Der Schwingungsdämpfer 7 ist insbesondere als ölhydraulischer Dämpfer ausgeführt, dessen Kolbenstange zum Schutz vor Verschmutzung mit einer Gummi-Manschette ummantelt ist. Ein Defekt des Schwingungsdämpfers 7 oder der Gummi-Manschette kann zu Austritt von Hydrauliköl und somit zu Verschmutzungen des Stromabnehmers und einem teilweisen oder vollständigen Funktionsverlust des Schwingungsdämpfers 7 führen.

Um einen Defekt des Schwingungsdämpfers 7 oder der Gummi-Manschette frühzeitig zu erkennen, wird eine erfindungsgemäße Vorrichtung gemäß **Fig. 4** eingesetzt. Für eine vollständige Erfassung der Gummi-Manschette des Schwingungsdämpfers 7 werden je eine Kamera 5 und 6 auf einer Seite montiert, da nicht bekannt ist auf welcher Seite die Manschette liegt. Wichtig ist die Kameras 5 und 6 derart zu installieren, dass die gegenüber der horizontalen ungefähr diagonal von oben auf den Triebfahrzeug 1 und somit auf den Schwingungsdämpfer 7 blicken, damit eine vollständige Erfassung der Manschetten möglich ist.

Ein zweites Ausführungsbeispiel betrifft eine Inspektion einer Abrollkurve an einem Stromabnehmer eines Triebfahrzeuges des Schienenverkehrs.

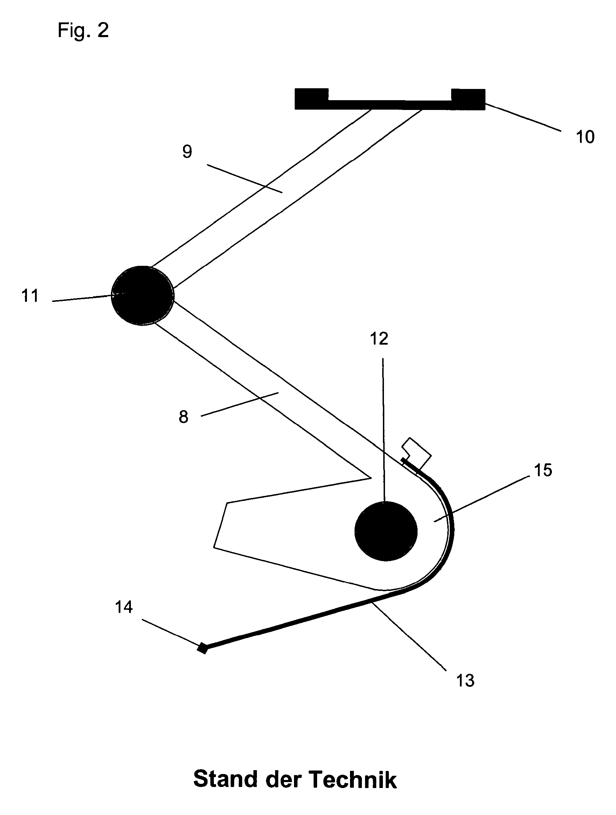

In **Fig. 2** ist schematisch ein Stromabnehmer mit einer Abrollkurve 15 gemäß dem Stand der Technik dargestellt.

Die Bewegung des Unterarmes 8 und des Oberarmes 9 wird zusätzlich über ein gespanntes Stahlseil 13 kontrolliert, dass zwischen einer Befestigung 14 und einer Befestigung am unteren Gelenk 12 eingespannt ist und um eine Abrollkurve 15 umgelenkt wird. Im Bereich der Abrollkurve 15 ist das Stahlseil 13 gefettet, um ein reibungs- und damit verschleißarmes Abrollen des Stahlseiles 13 auf der Abrollkurve 15 zu gewährleisten. Ein Verlust dieses Fettes insbesondere durch Witterungseinflüsse wie z.B. Regen oder durch mechanischen Abrieb führt somit zu einer erhöhten Reibung zwischen Stahlseil 13 und Abrollkurve 15. Dies kann zu Funktionsstörungen des unteren Gelenkes 12 sowie zu erhöhtem Verschleiß des Stahlseiles 13 führen.

Um einen Verlust des Fettes des Stahlseiles 13 im Bereich der Abrollkurve 15 frühzeitig zu erkennen, wird eine erfindungsgemäße Vorrichtung gemäß **Fig. 3** verwendet. Hierbei werden zur Inspektion der Abrollkurve 15 zwei Kameras 3 und 4 eingesetzt, da es je eine Abrollkurve 15 auf jeder Seite des Triebfahrzeuges 1 gibt und generell nicht angenommen werden kann dass eine Kameraposition existiert die beide Abrollkurven gleichzeitig erfasst. Die optischen Achsen der Kameras 3 und 4 sind dabei horizontal ausgerichtet. Die Anbauhöhe der Kameras 3 und 4 entspricht der Höhe des Triebfahrzeuges 1 ohne Stromabnehmer 2, so dass beide Kameras von der Seite auf je eine Abrollkurve 15 blicken.

Zur Auswertung von Messdaten beider Ausführungsbeispiele erfolgt zunächst eine Detektion und Lokalisation der zu inspizierenden Stromabnehmerteile Schwingungsdämpfermanschette bzw. Abrollkurve 15 aus einem Bild heraus. Hierfür werden insbesondere gängige Mustererkennungsalgorithmen verwendet.

Anschließend werden die erkannten Elemente auf Öl bzw. Fett hin untersucht. Dies erfolgt durch eine bildpunktweise Differenz des visuellen Kanals und des ultravioletten Kanal und Vergleich mit einem Schwellwert. Die Differenz der Intensität des sichtbaren Kanals und der Intensität des ultravioletten Kanals des erkannten und identifizierten Stromabnehmerteils wird mit einer insbesondere in einer Datenbank vorgegebenen Differenz verglichen. Anhand dieses Vergleichs wird die Entscheidung getroffen, ob und wenn ja mit wie viel Öl und/oder Fett das Stromabnehmerteil behaftet ist.

### Bezugszeichenliste

- 1: Triebfahrzeug
- 2: Stromabnehmer
- 3: horizontal ausgerichtete Kamera in Fahrtrichtung rechts
- 4: horizontal ausgerichtete Kamera in Fahrtrichtung links
- 5: diagonal ausgerichtete Kamera in Fahrtrichtung rechts
- 6: diagonal ausgerichtete Kamera in Fahrtrichtung links
- 7: Schwingungsdämpfer
- 8: Unterarm
- 9: Oberarm
- 10: Wippe
- 11: Kniegelenk
- 12: unteres Gelenk
- 13: Stahlseil
- 14: Befestigung
- 15: Abrollkurve
- 16: Grundrahmen

## Patentansprüche

1. Verfahren zur Bewertung von Benetzungen von Objekten, die relativ zur Aufnahmeeinheit eine hohe Geschwindigkeit haben, **dadurch gekennzeichnet, dass** mindestens ein Multispektral-Bild des Objektes aufgenommen wird, welches mindestens einen Kanal im sichtbaren Bereich und mindestens einen Kanal im ultravioletten Bereich bei gleichzeitiger Aufnahme aller Kanäle aufweist, und durch einen bildpunktweisen Vergleich der Intensität der aufgenommenen Kanäle die benetzenden Substanzen erkannt werden und im Bild Objekte und/oder Komponenten von Objekten erkannt werden und entschieden wird, ob an den jeweiligen Objekten bzw. Komponenten angemessen viel, zu wenig und/oder zu viel der jeweiligen Benetzung vorhanden ist und das Objekt gleichzeitig im visuellen und/oder ultravioletten Bereich durch einen Strahler oder die Sonne beleuchtet wird.

2. Verfahren zur Bewertung von Benetzungen nach Anspruch 1, **dadurch gekennzeichnet, dass** durch den bildpunktweisen Vergleich eine Einteilung der Benetzung gegeben werden kann in unbenetzt, Öl-benetzt, Fett-benetzt, feucht, alkalisch benetzt, durch Säure benetzt.

3. Verfahren zur Bewertung von Benetzungen nach Anspruch 2 **dadurch gekennzeichnet, dass** Objekte und/oder Komponenten von Objekten durch Musterkennung, Spektralanalyse und/oder Analyse der Polarisation im Bild erkannt werden.

4. Verfahren zur Bewertung von Benetzungen nach einem oder mehreren der Ansprüche 1 bis 3 **dadurch gekennzeichnet, dass** die Objekte und/oder Komponenten von Objekten eine Straße, Schiene, Fassaden, Bahnsteige, Dächer, Schotter, Leitplanken, Karosserie, Räder, Stoßdämpfer, Schwingungsdämpfer am Stromabnehmer und/oder Abrollkurve sind.

5. Verfahren zur Bewertung von Benetzungen nach einem oder mehreren der Ansprüche 1 bis 4, **dadurch gekennzeichnet, dass** eine Differenz aus der Intensität des sichtbaren Kanals und der Intensität des ultravioletten Kanals gebildet wird und mit mindestens einem Schwellwert je Benetzungssubstanz verglichen wird.

6. Verfahren zur Bewertung von Benetzungen nach Anspruch 5, **dadurch gekennzeichnet, dass** der Schwellwert in Abhängigkeit von Umgebungshelligkeit, Blende eines Objektivs der Bildaufzeichnungsvorrichtung und Belichtungszeit bestimmt wird.

7. Verfahren zur Bewertung von Benetzungen nach mindestens einem der Ansprüche 5 und 6, **dadurch gekennzeichnet, dass** bei einer Digitalkamera mit einer 8-bit-Intensitätsauflösung für jeden Kanal im resultierenden Bild der bildpunktweisen Differenz von visuellem Kanal und ultravioletten Kanal unbenetzte Objekte einen zwischen Null und 10 Grauwerteinheiten liegenden Maximalwert des Grauwertes aufweisen, fett- und/oder ölbehaftete Objekte einen Maximalwert des Grauwertes aufweisen, der mindestens 30 Grauwerteinheiten über dem Maximalwert des Grauwertes der fett- und ölfreien Objekte liegt, und der Schwellwert zwischen den Maximalwert des Grauwertes der unbenetzten Objekte und den der fett- und/oder ölbehafteten Objekte angesetzt wird.

8. Verfahren zur Bewertung von Benetzungen nach einem oder mehreren der Ansprüche 5 bis 7, **dadurch gekennzeichnet, dass** bei einer Digitalkamera mit einer 8-bit-Intensitätsauflösung für jeden Kanal im resultierenden Bild der bildpunktweisen Differenz von visuellem Kanal und ultravioletten Kanal feuchte Objekte von öligen oder fettigen Objekten **dadurch** unterschieden werden, dass die bildpunktweise Differenz geringer ist als die bei fettigen oder öligen Objekten.

9. Verfahren zur Bewertung von Benetzungen nach Anspruch 7, **dadurch gekennzeichnet, dass** der Schwellwert im Bereich zwischen 15 und 25 Grauwerteinheiten angesetzt wird.

10. Verfahren zur Bewertung von Benetzungen nach mindestens einem der Ansprüche 1 bis 9, **dadurch gekennzeichnet, dass** das Objekt innerhalb des Bildes von einer Mustererkennung erkannt und identifiziert wird.

11. Verfahren zur Bewertung von Benetzungen nach mindestens einem der Ansprüche 1 bis 10, **dadurch gekennzeichnet, dass** eine Entscheidung, ob und wenn ja mit wie viel Öl und/oder Fett das Objekt oder der Objektteil behaftet ist, getroffen wird.

12. Vorrichtung zur Bewertung von Benetzungen an Objekten, **dadurch gekennzeichnet, dass** mindestens eine auf das Objekt gerichteten Bildaufzeichnungsvorrichtung mit mindestens einem nur im sichtbaren Bereich empfindlichen Kanal sowie mindestens eine auf das Objekt gerichteten Bildaufzeichnungsvorrichtung mit mindestens einem nur im ultravioletten Bereich empfindlichen Kanal ein Bild des Objektes aufnimmt, die Bildaufzeichnungsvorrichtungen mit mindestens einer Datenaufzeichnungsanlage verbunden sind, die die Bilder speichert und/oder auswertet, und eine bildpunktweise Differenz aus einer Intensität des sichtbaren Kanals, des ultravioletten Kanals und einem Schwellwert durchführt.

13. Vorrichtung zur Bewertung von Benetzungen nach Anspruch 12, **dadurch gekennzeichnet, dass** mindestens eine Multispektralkamera, die sowohl einen im ultravioletten, als auch einen im sichtbaren Bereich empfindlichen Kanal und ein sowohl im ultravioletten, als auch im sichtbaren Bereich durchlässiges Objektiv aufweist, das Bild des Objektes aufnimmt.

14. Vorrichtung zur Bewertung von Benetzungen nach mindestens einem der Ansprüche 12 und 13, **dadurch gekennzeichnet, dass** das Fahrzeug steht und sich die mindestens eine Bildaufzeichnungsvorrichtung und/oder Multispektralkamera am stehenden Fahrzeug vorbeibewegt.

15. Vorrichtung zur Bewertung von Benetzungen nach einem oder mehreren der Ansprüche 12 bis 14, **dadurch gekennzeichnet, dass** die mindestens eine Bildaufzeichnungsvorrichtung und/oder Multispektralkamera ortsfest angeordnet ist und das Fahrzeug an dieser vorbeifährt.

16. Vorrichtung zur Bewertung von Benetzungen nach einem oder mehreren der Ansprüche 12 bis 14, **dadurch gekennzeichnet, dass** die mindestens eine Bildaufzeichnungsvorrichtung und/oder Multispektralkamera auf einem Fahrzeug und das Objekt ortsfest angeordnet ist.

17. Vorrichtung zur Bewertung von Benetzungen nach einem oder mehreren der Ansprüche 12 bis 16, **dadurch gekennzeichnet, dass** eine Beleuchtungsvorrichtung das Objekt mit sichtbarem oder ultraviolettem Licht beleuchtet.
